# FASCICULE DE BREVET EUROPEEN

(11) **EP 2 190 549 B1**
(45) Date de publication et mention de la délivrance du brevet: **13.03.2013**
(21) Numéro de dépôt: 08852025.9
(22) Date de dépôt: 04.09.2008
(51) Int. Cl.: B01D 15/18, B04B 5/00, G01N 30/42

(54) **CELLULES ET CANAUX DE LIAISON POUR APPAREILS DE CHROMATOGRAPHIE DE PARTAGE CENTRIFUGE**
VERBINDUNG VON KANÄLEN UND ZELLEN FÜR CHROMATOGRAPHEN MIT ZENTRIFUGALER VERTEILUNG
CONNECTING CHANNELS AND CELLS FOR CENTRIFUGAL PARTITION CHROMATOGRAPHS

(30) Priorité: 06.09.2007 FR 0706258
(43) Date de publication de la demande: 02.06.2010
(73) Titulaire: IFP Energies nouvelles, 92852 Rueil-Malmaison Cedex (FR)
(72) Inventeur: COUILLARD, François, F-56860 Sene (FR)
(86) Numéro de dépôt international: PCT/FR2008/001230
(87) Numéro de publication internationale: WO 2009/066014

(56) Documents cités:
- FR-A- 2 791 578
- FR-A- 2 852 104
- FR-A- 2 868 165
- JP-A- 2 067 959
- MARCHAL L ET AL: "Influence of flow patterns on chromatographic efficiency in centrifugal partition chromatography" JOURNAL OF CHROMATOGRAPHY, ELSEVIER SCIENCE PUBLISHERS B.V. AMSTERDAM, NL, vol. 869, no. 1-2, février 2000 (2000-02), pages 339-352, XP004186577 ISSN: 0021-9673
- L.MARCHAL, J.LEGRAND, A.FOUCAULT: "Mass transport and flow regimes in centrifugal partition chromatography" AICHE JOURNAL, vol. 48, no. 8, août 2002 (2002-08), pages 1692-1704, XP002469489

## Description

La présente invention concerne le domaine des appareils de chromatographie liquide-liquide centrifuge, et plus particulièrement des cellules et leurs canaux de liaison pour appareils de chromatographie liquide-liquide centrifuge, ainsi que leur procédé de fabrication.

### Etat de la technique

Une technique connue de séparation de constituants A et B en solution dans un mélange liquide consiste à l'injecter dans une colonne de chromatographie soumise à une force centrifuge, qui est conçue pour que l'une des phases liquides puisse être percolée dans l'autre phase liquide et réciproquement (chromatographie dite CCC ou CPC).

Dans la pratique, comme le montrent notamment les brevets FR 2.791.578, US 4 877 523 ou US 4.857.187, ce type de système de chromatographie comprend un ou plusieurs empilements de disques entraînés en rotation. Chacun d'eux comporte dans son épaisseur et sur toute sa périphérie une succession de cellules disposées suivant une direction radiale ou oblique et mises en séries par un ensemble des circuits de fines canalisations tortueuses aux extrémités de chaque cellule. Les circuits de tous les disques communiquent les uns avec les autres. Les cellules et leurs circuits de communication sont remplis d'une phase liquide stationnaire maintenue en place par la force centrifuge et une autre phase liquide mobile qui percole la phase stationnaire.

La rotation de l'empilement crée un champ d'accélération centrifuge important qui permet de maintenir la phase liquide dite stationnaire fixe, tandis que la phase mobile circule dans le mode dit ascendant si elle est plus légère que la phase stationnaire, et en mode descendant si elle est plus lourde.

Dans ce type d'appareil constitué par l'interconnexion en série d'une ou plusieurs chaînes de cellules, s'effectue la séparation des constituants d'une charge en solution liquide constitué d'au moins deux constituants de coefficients de partage différents tels qu'ils sont entraînés à des vitesses inégales par la phase mobile qui peut être l'une ou l'autre des phases liquides.

Le processus chromatographique, c'est-à-dire le partage des molécules devant être purifiées entre les deux phases liquides, a lieu dans chaque cellule, et le transfert de masse est favorisé par une bonne dispersion de la phase mobile arrivant du canal dans chaque cellule.

Un premier et double inconvénient de cet art antérieur est dû à la conception même des cellules creusées au travers de l'épaisseur des disques qui impose l'installation de joints d'étanchéité, généralement souple, par exemple en Téflon, entre chaque disque, fermant ainsi chaque cellule selon le plan du disque, donc perpendiculairement à l'axe principal de chaque cellule. Même si la cellule à des formes arrondies pour faciliter l'homogénéité de la dispersion pour un meilleur échange de matières entre les deux phases, les plans des joints créent avec la cellule des angles droits peu propices à une dispersion homogène des liquides. Enfin, ces plans de joints souples soumis à des variations de pression continuelles des liquides, se déforment dans le temps et modifie la géométrie des cellules, d'où un vieillissement de l'instrument.

Un deuxième inconvénient vient du fait que les cellules sont reliées entre elles par un canal en forme de ruban. On calcule et on vérifie aisément que cette forme de conduit, pour une section donnée, produit une perte de charge bien supérieure à celle provoquée par un conduit de même section mais carrée ou cylindrique. Pour limiter des pressions trop importantes et dans certains cas pour des raisons de difficulté d'usinage on est amené à augmenter l'épaisseur de ces conduits, donc à augmenter les volumes morts dans lesquels les produits en cours de séparation se re-mélangent partiellement, réduisant ainsi l'efficacité et la productivité du dispositif. De plus, si l'épaisseur du conduit n'est pas parfaitement constante sur toute sa longueur, ce qui est le cas lorsque les cellules sont découpées par un jet d'eau, il se forme un gradient des vecteurs vitesse des liquides mobiles (phase et composés à séparer), entre une face et l'autre du disque, ce qui a tendance à étaler les composés en cours de séparation, donc à les re-mélanger et, par voie de conséquence, à réduire les performances d'efficacité et de productivité de la machine.

### La méthode selon l'invention

La présente invention a donc pour objet de palier un ou plusieurs des inconvénients de l'art antérieur en proposant des cellules (1) pour colonne de chromatographie de partage centrifuge, constituée de disques empilés et comprenant un réseau de cellules tridimensionnelles interconnectées en série et communiquant avec des canaux de circulation de la phase liquide et réparties à la périphérie d'au moins un disque entraîné en rotation autour d'un axe principal (8), les cellules ont une forme géométrique de révolution sphérique ou ovoïde autour d'un axe sensiblement radial par rapport audit disque et sont reliées par des canaux (2, 4) de section de forme sensiblement circulaire, elliptique ou parallélépipédique, la section des canaux étant inférieure à la plus grande section transversale de la cellule, définie comme la section perpendiculaire à l'axe radial par rapport au disque.

Dans un mode de réalisation de l'invention la forme géométrique de révolution est définie par trois dimensions principales suivant trois axes X-X', Y-Y' et Z-Z', Z-Z' étant parallèle à l'axe de rotation du disque, l'axe Y, Y' étant radial par rapport au disque, et l'axe X, X' orthogonal aux deux autres axes, lesdites trois dimensions étant sensiblement identiques.

Dans un autre mode de réalisation de l'invention la dimension suivant l'axe X-X', est supérieure aux deux autres dimensions suivant les axes Z-Z' et Y-Y'.

Dans un autre mode de réalisation de l'invention la dimension suivant l'axe Y-Y' est supérieure aux deux autres dimensions suivant les axes Z-Z' et X-X'.

Dans un autre mode de réalisation de l'invention la dimension suivant l'axe Z-Z' est supérieure aux deux autres dimensions suivant les axes Y-Y' et X-X'.

Dans un autre mode de réalisation de l'invention les dimensions suivant les axes X-X', Y-Y' et Z-Z' sont différentes.

Les cellules selon l'invention peuvent être agencées au moins deux par deux l'une à la suite de l'autre suivant l'axe Y-Y' formant au moins un couple (5) de cellules répété régulièrement sur un cercle parallèle au plan de rotation du disque (3).

Dans un mode de réalisation de l'invention les cellules (1) sont agencées suivant au moins deux cercles concentriques parallèles au plan de rotation du disque (3).

Les cellules (1) du couple (5) de cellules selon l'invention sont reliées par un canal (4) de circulation de la phase liquide en forme de S.

Dans un mode de réalisation de l'invention l'axe formé par l'arrivée des canaux de circulation de la phase liquide est parallèle à l'axe Y-Y'.

Dans un autre mode de réalisation de l'invention l'axe formé par l'arrivée des canaux de circulation de la phase liquide est superposée à l'axe Y-Y'.

Dans un autre mode de réalisation de l'invention l'axe formé par l'arrivée des canaux de circulation de la phase liquide est décalée par rapport à l'axe Y-Y.

l'invention concerne également un procédé de fabrication des cellules (1) selon l'invention consistant à usiner des demi-cellules sur un disque (3) et son miroir (3'), les disques (3, 3') étant ensuite assemblés deux par deux pour reconstituer une cellule (1) entière.

Dans un mode de réalisation de l'invention l'assemblage des disques (3, 3') se fait par soudure.

Dans un autre mode de réalisation de l'invention l'assemblage se fait avec un joint (6).

Dans un autre mode de réalisation de l'invention les canaux (7) de circulation de la phase liquide sont formés directement dans le joint.

Comme on le verra plus en détail dans la suite de la description, ces nouvelles formes de cellules et de canaux sont propres à augmenter l'efficacité et la productivité des appareils de chromatographie.

### Présentation succincte des figures

Les caractéristiques et avantages de l'invention apparaîtront plus clairement à la lecture de la description ci-après de plusieurs exemples non limitatifs de réalisation, en se référant aux dessins annexés où :
La figure 1 représente un schéma de principe d'une cellule selon l'invention avec des canaux d'entrée et de sortie à section sensiblement ronde, carrée ou rectangulaire selon l'invention.
Les figures 2, 3 et 4 représentent différents modes de réalisation des cellules et canaux selon l'invention.
La figure 5 représente un exemple d'assemblages concentrique de cellules sur un même disque permettant d'augmenter la capacité utile d'un rotor.
Les figures 6, 7 et 8 représentent des exemples de constructions et d'assemblages de disques.
La figure 9 représente la répartition des liquides dans des cellules selon l'invention.

### Description détaillée de l'invention

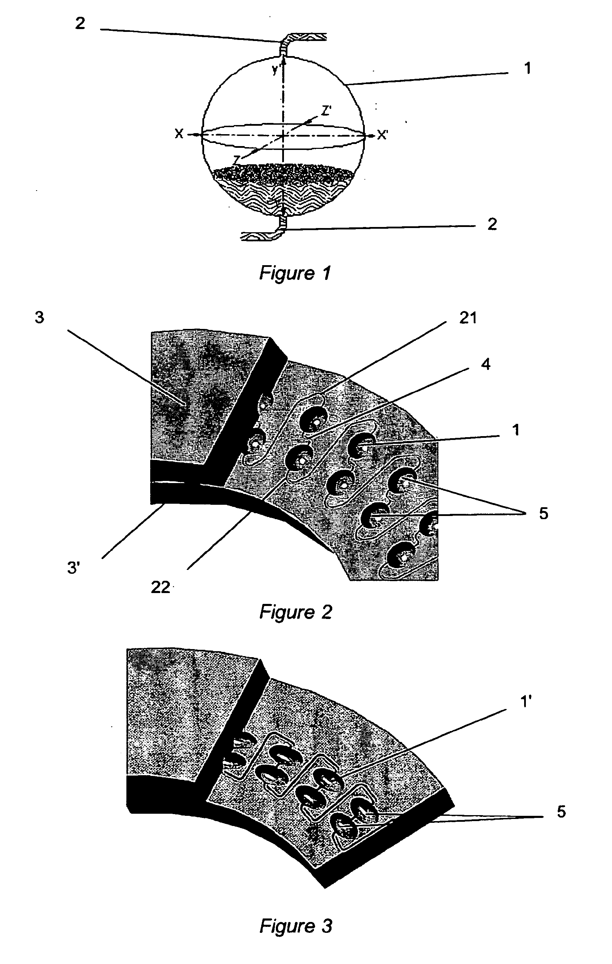

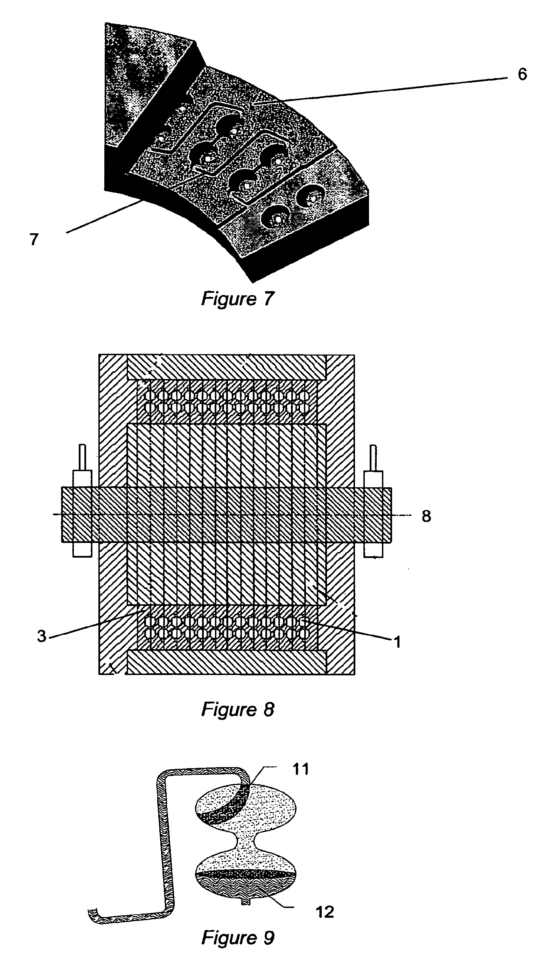

La figure 1 illustre une cellule (1) selon l'invention. La base de cette cellule (1) à une géométrie de révolution. Les cellules selon l'invention peuvent ainsi être déclinées depuis la sphère aux sphéroïdes et autres formes de révolution approchantes en modifiant les rapports respectifs des longueurs des axes X-X', Y-Y' et Z-Z'. L'axe Z-Z' étant parallèle à l'axe de rotation (8) principal du disque comportant les cellules illustré sur la figure 8, l'axe Y, Y' étant radial par rapport au disque, et l'axe X, X' orthogonal aux deux autres axes (figure 1, 2, 3, 4, 5, 6 et 7).

Une telle forme, comparée à des cellules ayant des parties anguleuses de l'art antérieur favorise une meilleure dispersion de la phase mobile dans la phase stationnaire et, par voie de conséquence, permet un meilleur échange de matières ce qui permet une séparation plus performante. L'axe de révolution de la forme des cellules est proche de la direction radiale des disques. De préférence, l'axe de révolution est selon la direction radiale.

Les canaux (2, 4) reliant ces cellules entres elles ont une section définie par deux directions principales qui vont déterminer leur forme. Ainsi suivant la longueur des axes définis par les deux directions principales, les canaux auront une section circulaire, carrée ou rectangulaire ou très proche d'une de ces formes, la section des canaux étant inférieure à la plus grande section transversale de la cellule. La section transversale de la cellule étant définie comme la section perpendiculaire à l'axe radial par rapport au disque. Cette section des cellules peut également être définie par les axes X-X' et Z-Z'. Ce type de forme de canaux permet de diminuer la perte de charge due au flux liquide, et de diminuer également le volume mort tout en améliorant le profil des vecteurs vitesse des liquides par rapport à un conduit en forme de ruban. D'une manière plus générale, ces canaux peuvent avoir une section dont les deux directions principales sont inférieures aux dimensions selon les axes X-X' et Z-Z' de la cellule. Par exemple, la largeur et la longueur d'une section rectangle seront plus petites que les dimensions selon les axes X-X' et Z-Z' de la cellule. Même raisonnement pour une section polygonale avec ses diagonales principales. Ces conduits (2, 4) sont connectés dans l'axe Y-Y' représenté sur la figure 1 ou légèrement excentré. En effet, l'expérimentation montre que la force de Coriolis associée à une excentration de l'axe d'entrée de la phase mobile dans la cellule, améliore considérablement l'homogénéité de la dispersion du spray (11) illustré sur la figure 9 dans la cellule (1).

Pour adapter la forme de ces cellules (1) aux différents groupes de systèmes biphasiques et aux différentes tailles d'instruments de chromatographie, on optimise les dimensions respectives selon les axes X, Y, Z. On modifie ainsi les formes de révolution selon les 3 axes de la cellule. L'axe Y étant sensiblement dans le même axe que celui de la force centrifuge. On sait que la pression hydrostatique, pour une force donnée, augmente avec la hauteur de la cellule selon cet axe. Dans le cas d'un agrandissement d'échelle d'un tel instrument, on limite l'agrandissement suivant l'axe Y et l'on privilégie l'agrandissement des dimensions de la cellule suivant les axes X et Z, afin de limiter cette pression.

Les figures 2, 3 et 4 illustrent différentes formes de cellules obtenues en modifiant les dimensions en fonction des axes X, Y et Z.

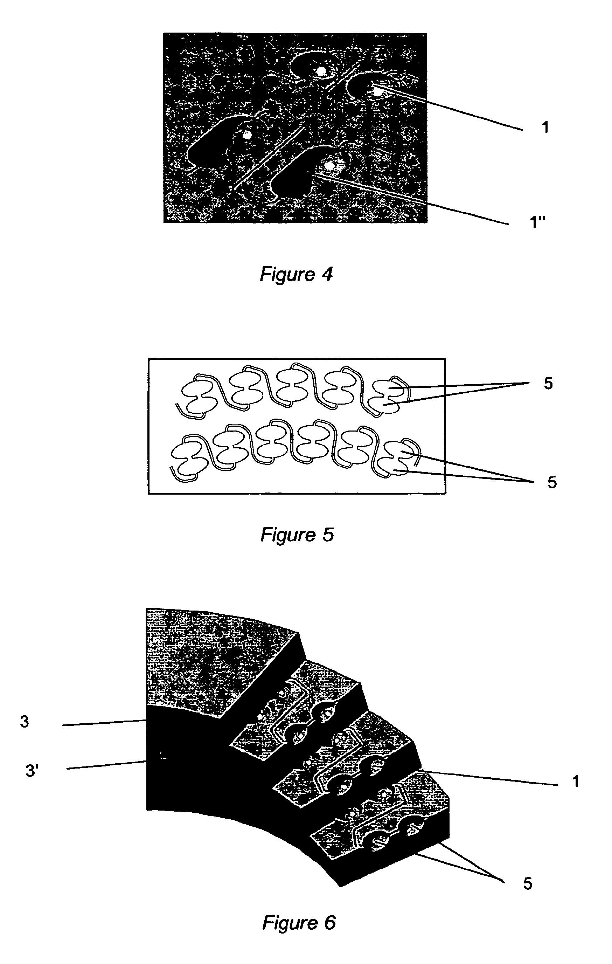

Sur la figure 2, les cellules (1) sont sphériques, les dimensions suivant les axes X, Y et Z ont sensiblement les mêmes valeurs. Sur la figure 3, les cellules (1') sont ovoïdes c'est la dimension suivant l'axe X qui a été augmentée par rapport à celle des axes Y et Z. La figure 4 illustre deux types de cellules, sphériques (1) et ovoïdes (1") dont les dimensions suivant l'axe Y ont été augmentées, disposées sur deux cercles concentriques. De façon plus générale, on peut ainsi avoir des cellules dont les dimensions suivant les trois axes X-X', Y-Y' et Z-Z' sont toutes identiques, toutes différentes, ou dont deux dimensions sont égales.

Les figures 2, 3, 5, 6 et 7 montrent un exemple d'un autre mode de réalisation de l'invention, le mode "Twin" ou couple (5), où les cellules sont groupées deux par deux en série et reliées entre elles par des canaux (4). Ces figures ne sont pas limitatives car dans certaines applications, il est intéressant de faire des groupes de plusieurs cellules sur le principe de la "Twin". Par exemple, dans le cas de la figure 5 les couples (5) de cellules sont disposés sur deux cercles concentriques. Ces configurations représentant la version couple sont à titre d'exemple non limitatif car on peut également réaliser les mêmes systèmes avec une ou plusieurs cellules.

Avec ce type de dispositif à cellules simple, double ou plus les meilleures performances sont obtenues quand la phase mobile entre à vitesse élevée dans la phase stationnaire car il se déclenche un spray qui augmente la surface d'échange entre les deux phases. Dans le mode ascendant, la force centrifuge fait que la phase stationnaire lourde est plaquée dans le conduit d'entré coudé (21). En mode ascendant, la phase mobile légère doit faire son passage entre la paroi du conduit et cette phase stationnaire, ce qui réduit la section du passage. La phase légère prend donc une grande vitesse et déclenche le spray. Il en est de même en mode descendant dans le coude (22). A faible débit, il n'en est pas de même avec le canal (4) car il se trouve dans l'axe de la force et dans certains cas, le spray (11) ne se déclenche pas dans la deuxième cellule du couple. Dans certaines applications, il est intéressant de relier les cellules en couple par un canal (4) en S, illustré sur la figure 2, ou toutes autres formes se rapprochant d'un S, afin de produire le spray (11) dans la deuxième cellule.

Dans d'autres applications, avec des phases visqueuses et de densités très proches pour lesquelles la séparation est difficile (à cause d'une faible coalescence) (12), il est nécessaire d'agrandir le canal (4) entre les deux cellules couple afin d'éviter le spray (11) dans la deuxième cellule couple pour réduire les turbulences gênant la coalescence.

La réalisation de ces cellules peut se faire de différentes façons.

Un premier procédé de fabrication consiste à usiner des demi cellules sur un disque (3) et son miroir ou symétrique (3') par rapport au flanc du disque, comme illustré par exemple sur la figure 6 qui montre des coupes d'un empilage de quatre disques selon l'invention. Dans ce cas les disques des extrémités ne sont usinés que sur une seule face, alors que les autres disques sont usinés sur les deux faces. Les disques sont ensuite assemblés pour former des cellules entières par soudure à faisceau électronique ou tout autre procédé de soudure de surface à l'échelle moléculaire. Les disques peuvent être en matériaux plastiques comme du téflon et pressés les uns contre les autres, assurant ainsi directement l'étanchéité (figure 8).

Une autre façon d'assembler les disques consiste disposer un joint (6) découpé selon le contour des cellules. Dans ce cas il est possible d'utiliser le joint dans son épaisseur pour réaliser les canaux (7) comme illustré figure 7. Ce joint (6) peut être en plastique et serré entre les disques (3, 3'), ou métallique fixé comme précédemment expliqué, par un des modes connus de soudure de surface. Ainsi, les disques ne doivent être usinés que pour faire les demi formes de cellules, sans usinage des demi canaux.

Un autre procédé de fabrication consiste à réaliser les cellules par fonderie en cire perdue, procédé bien connu, par exemple dans le domaine de l'aéronautique où il est utilisé pour la fabrication des ailettes de turbines des réacteurs.

La fabrication des cellules peut aussi se faire par injection / extrusion de matériaux plastiques qui est une méthode bien connue de l'homme du métier.

Il doit être évident pour l'homme du métier que la présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications jointes.

## Revendications

1. Dispositif pour colonne de chromatographie de partage centrifuge, constitué de disques empilés et comprenant un réseau de cellules (1) tridimensionnelles interconnectées en série et communiquant avec des canaux de circulation de la phase liquide et réparties à la périphérie d'au moins un disque entraîné en rotation autour d'un axe principal (8), **caractérisé en ce que** les cellules ont une forme géométrique de révolution sphérique ou ovoïde définie par trois dimensions principales suivant trois axes X-X', Y-Y' et Z-Z, Z-Z' étant parallèle à l'axe de rotation du disque, l'axe Y, Y' étant radial par rapport au disque, et l'axe X, X' orthogonal aux deux autres axes et sont reliées par des canaux (2, 4) de section de forme sensiblement circulaire, elliptique ou parallélépipédique, la section des canaux étant inférieure à la plus grande section transversale de la cellule, définie comme la section perpendiculaire à l'axe radial par rapport au disque.

2. Dispositif selon la revendication 1 dont les trois dimensions suivant les trois axes X-X', Y-Y' et Z-Z', Z-Z' sont sensiblement identiques.

3. Dispositif selon la revendication 1 dont la dimension suivant l'axe X-X', est supérieure aux deux autres dimensions suivant les axes Z-Z' et Y-Y'.

4. Dispositif selon la revendication 1 dont la dimension suivant l'axe Y-Y' est supérieure aux deux autres dimensions suivant les axes Z-Z' et X-X'.

5. Dispositif selon la revendication 1 dont la dimension suivant l'axe Z-Z' est supérieure aux deux autres dimensions suivant les axes Y-Y' et X-X'.

6. Dispositif selon la revendication 1 dont les dimensions suivant les axes X-X', Y-Y' et Z-Z' sont différentes.

7. Dispositif selon une des revendications précédentes caractérisé en ce sont agencées au moins deux par deux l'une à la suite de l'autre suivant l'axe Y-Y' formant au moins un couple (5) de cellules répété régulièrement sur un cercle parallèle au plan de rotation du disque (3).

8. Dispositif selon une des revendications précédentes **caractérisé en ce que** les cellules (1) sont agencées suivant au moins deux cercles concentriques parallèles au plan de rotation du disque (3).

9. Dispositif selon la revendication 7 **caractérisé en ce que** les deux cellules (1) du couple (5) de cellules sont reliées par un canal (4) de circulation de la phase liquide en forme de S.

10. Dispositif selon une des revendications précédentes **caractérisé en ce que** l'axe formé par l'arrivée des canaux de circulation de la phase liquide est parallèle à l'axe Y-Y'.

11. Dispositif selon la revendication 10 **caractérisé en ce que** l'axe formé par l'arrivée des canaux de circulation de la phase liquide est superposé à l'axe Y-Y'.

12. Dispositif selon la revendication 10 **caractérisé en ce que** l'axe formé par l'arrivée des canaux de circulation de la phase liquide est décalé par rapport à l'axe Y-Y'.

13. Procédé de fabrication du dispositif suivant les revendications 1 à 12 **caractérisé en ce qu'**il consiste à usiner des demi-cellules sur un disque (3) et son miroir (3'), les disques (3, 3') étant ensuite assemblés deux par deux pour reconstituer une cellule (1) entière.

14. Procédé de fabrication selon la revendication 13 **caractérisé en ce que** l'assemblage des disques (3, 3') se fait par soudure.

15. Procédé de fabrication selon la revendication 13 **caractérisé en ce que** l'assemblage se fait avec un joint (6).

16. Procédé de fabrication selon la revendication 15 **caractérisé en ce que** les canaux (7) de circulation de la phase liquide sont formés directement dans le joint.

## Claims

1. A device for a centrifugal partition chromatography column, consisting of stacked discs and comprising a network of three-dimensional cells (1) interconnected in series and communicating with liquid phase circulation channels and distributed over the periphery of at least one disc driven into rotation about a main axis (8), **characterized in that** the cells have a geometric shape of spherical or ovoid revolution defined by three main dimensions along three axes X-X', Y-Y' and Z-Z', Z-Z' being parallel to the axis of rotation of the disc, axis Y-Y' being radial with respect to the disc, and axis X-X' orthogonal to the other two axes, and they are connected by channels (2, 4) of substantially circular, elliptical or parallelepipedic shaped section, the section of the channels being smaller than the largest cross-section of the cell, defined as the section perpendicular to the radial axis with respect to the disc.

2. A device as claimed in claim 1, whose three dimensions along the three axes X-X', Y-Y' and Z-Z' are substantially identical,

3. A device as claimed in claim 1, whose dimension along axis X-X' is greater than the other two dimensions along axes Z-Z' and Y-Y'.

4. A device as claimed in claim 1, whose dimension along axis Y-Y' is greater than the other two dimensions along axes Z-Z' and X-X'.

5. A device as claimed in claim 1, whose dimension along axis Z-Z' is greater than the other two dimensions along axes Y-Y' and X-X'.

6. A device as claimed in claim 1, whose dimensions along axes X-X', Y-Y' and Z-Z' are different.

7. A device as claimed in any one of the previous claims, **characterized in that** cells (1) are arranged at least two by two, one after the other, along axis Y-Y', forming at least one pair (5) of cells regularly repeated on a circle parallel to the plane of rotation of disc (3).

8. A device as claimed in any one of the previous claims, **characterized in that** cells (1) are arranged in at least two concentric circles parallel to the plane of rotation of disc (3).

9. A device as claimed in claim 7, **characterized in that** the two cells (1) of pair of cells (5) are connected by an S-shaped liquid phase circulation channel (4).

10. A device as claimed in any one of the previous claims, **characterized in that** the axis made up of the inlet of the liquid phase circulation channels is parallel to axis Y-Y'.

11. A device as claimed in claim 10, **characterized in that** the axis made up of the inlet of the liquid phase circulation channels is superposed on axis Y-Y'.

12. A device as claimed in claim 10, **characterized in that** the axis made up of the inlet of the liquid phase circulation channels is offset with respect to axis Y-Y'.

13. A method of manufacturing the device as claimed in claims 1 to 12, **characterized in that** it consists in machining half-cells on a disc (3) and its mirror (3'), discs (3, 3') being then assembled two by two so as to form an entire cell (1).

14. A manufacturing method as claimed in claim 13, **characterized in that** discs (3, 3') are assembled by welding.

15. A manufacturing method as claimed in claim 13, **characterized in that** they are assembled by a joint (6).

16. A manufacturing method as claimed in claim 15, **characterized in that** liquid phase circulation channels (7) are directly formed within the joint.

## Patentansprüche

1. Vorrichtung für eine Säule für die zentrifugale Verteilungschromatographie, die aus gestapelten Scheiben besteht und ein Netz von in Reihe miteinander verbundenen, dreidimensionalen Zellen (1) umfasst und mit Kanälen zur Zirkulation der flüssigen Phase in Verbindung steht, die am Umfang mindestens einer Scheibe verteilt sind, die um eine Hauptachse drehangetrieben wird, **dadurch gekennzeichnet, dass** die Zellen eine geometrische kugelförmige oder eiförmige Umlaufform haben, die von drei Hauptabmessungen gemäß drei Achsen X-X', Y-Y' und Z-Z' definiert wird, wobei Z-Z' zu der Drehachse der Scheibe parallel ist, die Achse Y, Y' in Bezug auf die Scheibe radial ist und die Achse X, X' zu den beiden anderen Achsen orthogonal ist und die Achsen durch Kanäle (2, 4) eines Abschnitts mit im Wesentlichen kreisförmiger, elliptischer oder quaderförmiger Form verbunden sind, wobei der Kanalabschnitt kleiner als der größte Querschnitt der Zelle ist, der wie der Abschnitt definiert ist, der zu der in Bezug auf die Scheibe radialen Achse senkrecht ist.

2. Vorrichtung nach Anspruch 1, deren drei Abmessungen gemäß der drei Achsen X-X', Y-Y' und Z-Z' im Wesentlichen gleich sind.

3. Vorrichtung nach Anspruch 1, deren Abmessung gemäß der Achse X-X' größer als die beiden anderen Abmessungen gemäß der Achsen Z-Z' und Y-Y' ist.

4. Vorrichtung nach Anspruch 1, deren Abmessung gemäß der Achse Y-Y' größer als die beiden anderen Abmessungen gemäß der Achsen Z-Z' und X-X' ist.

5. Vorrichtung nach Anspruch 1, deren Abmessung gemäß der Achse Z-Z' größer als die beiden anderen Abmessungen gemäß der Achsen Y-Y' und X-X' ist.

6. Vorrichtung nach Anspruch 1, deren Abmessungen gemäß der Achsen X-X', Y-Y' und Z-Z' unterschiedlich sind.

7. Vorrichtung nach einem der vorhergehenden Ansprüche, **dadurch gekennzeichnet, dass** die Zellen (1) mindestens paarweise aufeinander folgend gemäß der Achse Y-Y' angeordnet sind, wodurch mindestens ein Zellenpaar (5) gebildet wird, das regelmäßig auf einem Kreis, der zu der Drehungsebene der Scheibe (3) parallel ist, wiederholt wird.

8. Vorrichtung nach einem der vorhergehenden Ansprüche, **dadurch gekennzeichnet, dass** die Zellen (1) gemäß zwei konzentrischen Kreisen, die zu der Drehungsebene der Scheibe (3) parallel sind, angeordnet sind.

9. Vorrichtung nach Anspruch 7, **dadurch gekennzeichnet, dass** die zwei Zellen (1) des Zellenpaars (5) durch einen S-förmigen Kanal (4) zur Zirkulation der flüssigen Phase verbunden sind.

10. Vorrichtung nach einem der vorhergehenden Ansprüche, **dadurch gekennzeichnet, dass** die durch den Eingang der Kanäle zur Zirkulation der flüssigen Phase gebildete Achse zu der Achse Y-Y' parallel ist.

11. Vorrichtung nach Anspruch 10, **dadurch gekennzeichnet, dass** die durch den Eingang der Kanäle zur Zirkulation der flüssigen Phase gebildete Achse der Achse Y-Y' überlagert ist.

12. Vorrichtung nach Anspruch 10, **dadurch gekennzeichnet, dass** die durch den Eingang der Kanäle zur Zirkulation der flüssigen Phase gebildete Achse in Bezug auf die Achse Y-Y' versetzt ist.

13. Verfahren zur Herstellung der Vorrichtung nach den Ansprüchen 1 bis 12, **dadurch gekennzeichnet, dass** es in dem Fertigen von Halbzellen auf einer Scheibe (3) und deren Spiegel (3') besteht, wobei die Scheiben (3, 3') anschließend paarweise zusammengefügt werden, um eine ganze Zelle (1) wiederherzustellen.

14. Herstellungsverfahren nach Anspruch 13, **dadurch gekennzeichnet, dass** das Zusammenfügen der Scheiben (3, 3') durch Schweißen vorgenommen wird.

15. Herstellungsverfahren nach Anspruch 13, **dadurch gekennzeichnet, dass** das Zusammenfügen mit einer Naht (6) vorgenommen wird.

16. Herstellungsverfahren nach Anspruch 15, **dadurch gekennzeichnet, dass** die Kanäle (7) zur Zirkulation der flüssigen Phase direkt in der Naht gebildet werden.
